# EUROPÄISCHE PATENTANMELDUNG

(11) **EP 1 760 453 A1**
(43) Veröffentlichungstag der Anmeldung: **07.03.2007**
(21) Anmeldenummer: 05018942.2
(22) Anmeldetag: 31.08.2005
(51) Int. Cl.: G01N 21/47, G01J 3/10

(54) **Fotoelektrisches Handmessgerät und optische Messeinheit dafür**

(71) Anmelder: GretagMacbeth AG, 8105 Regensdorf (CH)
(72) Erfinder: De Vries, Loris, 8107 Buchs (CH)
(74) Vertreter: Schwabe - Sandmair - Marx

(57) **Zusammenfassung**

Ein fotoelektrisches Handmessgerät besitzt ein Gehäuse (G), das an seiner Unterseite mit einem Messfenster (F) versehen ist, durch welches hindurch die fotoelektrische Ausmessung der Oberfläche eines Messobjekts erfolgt. Im Gehäuse ist eine Beleuchtungseinrichtung untergebracht zur Beaufschlagung des Messobjekts durch das Messfenster hindurch mit Beleuchtungslicht aus zwei zu einander senkrechten Raumrichtungen unter einem definierten, relativ kleinen Einfallswinkelbereich. Im Gehäuse befindet sich ferner eine optische Aufpickeinrichtung zum Auffangen des vom Messobjekt remittierten Messlichts durch das Messfenster hindurch unter einem definierten, relativ kleinen Aufpickwinkelbereich, eine von der Aufpickeinrichtung mit dem aufgefangenen Messlicht beaufschlagbare fotoelektrische Wandlereinrichtung zur Umwandlung des Messlichts in entsprechende elektrische Messsignale und eine elektronische Verarbeitungseinrichtung für die elektrischen Messsignale. Das Gehäuse (G) ist an seiner Vorderseite mit einer seitlichen Messnische (N) versehen, welche durch ein bewegliches Wandteil nach aussen hin geöffnet und geschlossen werden kann. Das Messfenster (F) ist im Bereich der Messnische (N) so angeordnet, dass das Messfenster bei geöffneter Messnische frei sichtbar ist. Ferner ist ein motorischer Antrieb vorgesehen, um das Wandteil zu bewegen und dadurch die Messnische (N) zu öffnen bzw. zu schliessen.

## Beschreibung

Die Erfindung betrifft eine optische Messeinheit für ein Messgerät zur fotoelektrischen Ausmessung eines Messobjekts gemäss dem Oberbegriff des unabhängigen Anspruchs 1 sowie ein mit einer solchen optischen Messeinheit ausgestattetes fotoelektrisches Handmessgerät gemäss dem Oberbegriff des unabhängigen Anspruchs 19. Insbesondere betrifft die Erfindung eine optische Messeinheit für ein Farbmessgerät, Farbdensitometer, Spektralfotometer oder Multifunktionsgerät zur quantitativen Erfassung von Farben sowie ein solches Gerät.

Unter Handmessgerät wird im folgenden ein in der Regel autonomes, tragbares Messgerät verstanden, das normalerweise mit Bedien- und Anzeigeorganen ausgestattet ist und von Hand an bzw. auf dem auszumessenden Objekt positioniert wird. Ausdrücklich mit eingeschlossen sind aber auch solche Geräte, die über einen Kommunikationskanal mit einem externen Gerät, z.B. einem Rechner verbunden werden können und mit diesem Mess- und/oder Steuerdaten austauschen können. Im Extremfall kann ein Handmessgerät im Sinne der Erfindung in einem Gehäuse auch nur eine optische Messeinheit und eine nachfolgende fotoelektrische Wandlereinrichtung umfassen.

Bekannte gattungsgemässe Handmessgeräte sind z.B. das "SpectroEye" der Firma Gretag-Macbeth AG, das "Vipdens 2000" der Firma Viptronic, das "530 SpectroDensitometer" der Firma X-Rite und das "SpectroDens" der Firma Techkon.

Handmessgeräte der gattungsgemässen Art werden zur spektralen und/oder densitometrischen Farbmessung in einer Vielzahl von Anwendungsbereichen wie Verpackungs-, Zeitungs-, Werbe-, Sicherheits-, Farb- und Lackindustrie eingesetzt. Die messbare Farbpalette geht von den klassischen CMYK Druckfarben über metallisierte, bis hin zu hoch pigmentierten ANIVA Farben. Diese können beispielsweise auf Substraten wie gestrichenes oder ungestrichenes Papier und transparenten oder metallisierten Folien aufgetragen sein. Das breite Einsatzgebiet und die zum Teil rauen Umgebungsbedingungen stellen an ein dafür verwendetes Gerät sehr hohe Anforderungen.

Eine kompakte, ergonomische und robuste Ausführung ist eine Grundanforderung an ein Handmessgerät für den industriellen Einsatz. Bei der Druckprozesskontrolle im Drucksaal, wo Farbdämpfe und Druckpuderpartikel in der Luft schweben, sind Staubund Schmutzdichtigkeit unabdingbar. Das Messergebnis muss auch bei Messobjekten mit fein gerichtet strukturierter Oberfläche von der Positionierung des Messgerätes möglichst unabhängig sein. Dem Anspruch einer immer kleineren Makulatur durch den Druck von Farbkontrollfeldern folgt direkt eine Reduktion von deren Abmessungen. Das Messgerät muss daher mittels wechselbarer Messblende auf die zu messende Farbkontrollfeldgrösse angepasst und exakt darauf positioniert werden können. Je nach Situation ist eine Messung ohne Zusatzfilter oder mit Polarisations-, UV- oder D65 Filtern erforderlich.

Die genannten auf dem Markt befindlichen Handmessgeräte erfüllen diese Anforderungen in unterschiedlichem Ausmass. Ein grosses Problem, das allen bekannten Geräten gemeinsam ist, besteht aber in der teils ungenügend präzisen, teils umständlichen Positionierung des Handmessgeräts auf dem Messobjekt, speziell wenn die auszumessenden Messstellen sehr klein sind.

Wegen der oftmals vorhandenen Oberflächentextur des Messobjekts wird das einfallende Beleuchtungslicht nicht gleichmässig diffus remittiert, so dass das Messergebnis von der Positionierung des Messgeräts auf dem Messobjekt abhängt. Insbesondere ist dies bei konstruktiv einfacheren, gerichteten Beleuchtungsanordnungen der Fall. Mit Positionierung ist dabei die Drehstellung des Messgeräts bezüglich der Normalen auf das Messobjekt am Messort gemeint. Diesem Problem wird vielfach durch eine allseitige kontinuierliche oder aus diskreten Lichtquellen aufgebaute Ringbeleuchtung abgeholfen. Konstruktionsbedingt liegt es aber in der Natur einer ringförmigen (45°/0°-)Beleuchtungsanordnung, dass die Messstelle des Messobjekts während der Messung vollumfänglich abgedeckt wird. Kommt bei einem Messgerät eine derartige Messanordnung zum Einsatz, bedarf es mehr oder weniger aufwendiger Mechanismen, um bei der Positionierung freie Sicht auf das Messobjekt zu gewähren.

Einige bekannte Geräte (z.B. "Vipdens 2000" und "530 SpectroDensitometer") sind mit einem Klappmechanismus ausgestattet. Im Ruhezustand, in dem die Positionierung des Geräts auf dem Messobjekt erfolgt, ist das Gerätegehäuse gegenüber einer Fussplatte, die eine Visieröffnung aufweist, hochgeklappt, so dass die Visieröffnung frei sichtbar ist. Für die Messung wird dann das Gerätegehäuse niedergeklappt, wobei der Messkopf des Geräts auf die Visieröffnung abgesenkt wird. Dabei kann es passieren, dass das Gerät verrutscht und damit die Positionierung nicht mehr stimmt. Ausserdem sind diese Geräte aufgrund des Klappmechanismus mechanisch relativ aufwendig.

Andere bekannte Geräte (z.B. "SpectroEye") besitzen einen motorisch beweglichen Messkopf, der sich im Ruhezustand innerhalb des Gerätegehäuses befindet und für die Messung aus diesem heraus über eine vorstehende Visieröffnung gefahren und dann nach der Messung wieder in das Gehäuse zurückgefahren wird. Diese Lösung ist mechanisch aufwendig.

Weitere bekannte Geräte (z.B. "SpectroDens") haben nur ein Visier, das die auszumessende Messstelle abdeckt, so dass die Positionierung des Messgeräts speziell bei kleinen Messstellen sehr erschwert wird. Dieses und ähnliche Geräte haben meist eine einfache gerichtete Beleuchtungsanordnung und sind mechanisch relativ einfach konzipiert. Durch das Fehlen einer kontinuierlichen oder diskreten Ringbeleuchtung weisen sie aber die genannten messtechnischen Einschränkungen auf.

Durch die vorliegende Erfindung sollen nun eine optische Messeinheit und ein Handmessgerät der gattungsgemässen Art dahingehend verbessert werden, dass mit möglichst geringem konstruktiven Aufwand eine weitgehende Positionierungsunabhängigkeit und ohne Abstriche bei der Handhabungsergonomie eine präzise Positionierung auf dem Messobjekt gewährleistet sind.

Diese der Erfindung zugrundeliegende Aufgabe wird durch die durch die Merkmale des unabhängigen Anspruchs 1 gekennzeichnete erfindungsgemässe optische Messeinheit bzw. das durch die Merkmale des unabhängigen Anspruchs 19 gekennzeichnete erfindungsgemässe fotoelektrische Handmessgerät gelöst.

Ein relativ kleiner Bereich der Einfallswinkel (auch "Einfallswinkelbereich" genannt) bedeutet insbesondere, dass das untere Ende des Einfallswinkelbereichs größer 35°, insbesondere größer 40° oder 43° ist, während das obere Ende kleiner 55°, insbesondere kleiner 50° oder 47° ist. Ein relativ kleiner Aufpickwinkelbereich bedeutet insbesondere, dass der Winkelbereich sich über weniger als 20°, insbesondere weniger als 15° oder 10° oder weniger als 5° erstreckt. Die Mitte des Aufpickwinkelbereichs liegt insbesondere in einem Bereich von -5° bis +10°. Im wesentlichen 90° bedeutet insbesondere, dass der Versetzungswinkel in einem Bereich mit einer unteren Grenze von 80° oder 85° oder 88° und einer oberen Grenze von 100° oder 95° oder 92° liegt.

Gemäss dem grundlegenden Gedanken der Erfindung erfolgt also die Beleuchtung des Messobjekts aus zwei zu einander senkrechten Raumrichtungen. Dies ermöglicht eine besonders einfache konstruktive Implementierung der optischen Messeinheit und führt trotzdem zu für die Praxis ausreichend positionierungsunabhängigen Messergebnissen, die in den meisten praktischen Anwendungsfällen denjenigen einer kontinuierlichen oder diskreten Ringbeleuchtung ebenbürtig sind.

Vorteilhafte Ausgestaltungen und Weiterbildungen der erfindungsgemässen optischen Messeinheit und des erfindungsgemässen Handmessgeräts sind Gegenstand der abhängigen Ansprüche.

Im folgenden wird die Erfindung anhand der Zeichnung näher erläutert. Es zeigen:
- Fig. 1: eine Schrägansicht eines typischen Ausführungsbeispiels des erfindungsgemässen Handmessgeräts,
- Fig. 2: das Handmessgerät der Fig. 1 ohne Gehäuse,
- Fig. 3: ein Blockschema der wichtigsten Funktionseinheiten des Handmessgeräts der Fig. 1,
- Fig. 4: eine Schrägansicht der erfindungsgemässen optischen Messeinheit des Handmessgeräts gemäss der Fig. 1,
- Fig. 5-7: Detailansichten der optischen Messeinheit der Fig. 4,
- Fig. 8: die optische Messeinheit der Fig. 4 in aufgeschnittener Darstellung,
- Fig. 9: eine Skizze zur Erläuterung der Beleuchtungsstrahlengänge,
- Fig. 10: eine Skizze zur Erläuterung einer optischen Visierlichtmarke,
- Fig. 11: eine partielle Draufsicht auf eine Detailvariante und
- Fig. 12: einen Schnitt nach der Linie XII-XII der Fig. 11.

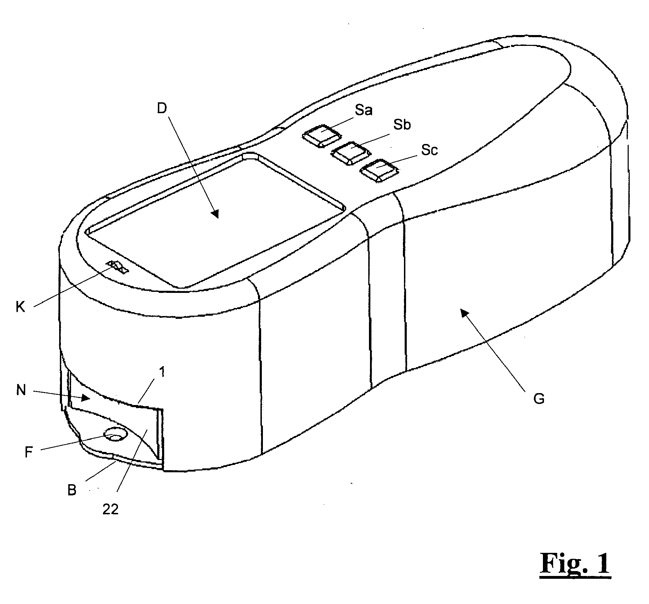

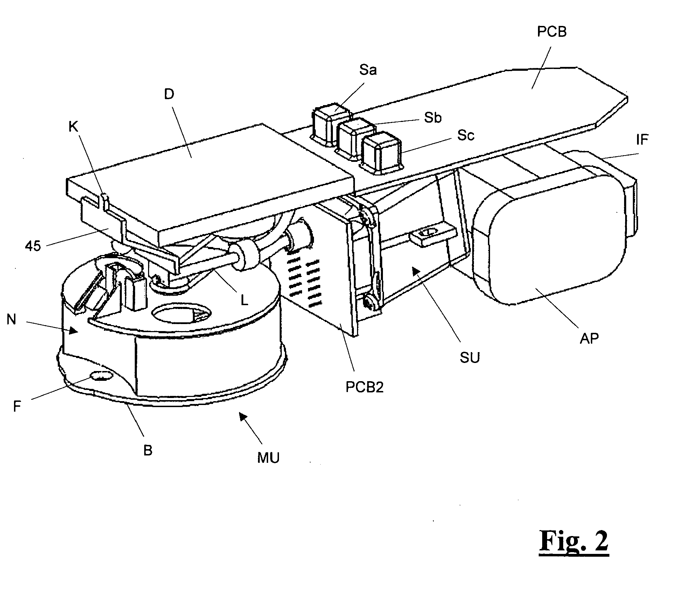

Die äussere Gestalt des erfindungsgemässen, hier beispielsweise als Spektralfotometer ausgebildeten Handmessgeräts ist aus Fig. 1 ersichtlich. Wie bei einem Handmessgerät üblich, sind alle Funktionseinheiten und sonstigen Organe und Bauteile im Inneren bzw. an der Oberfläche eines Gehäuses G untergebracht. An der Oberseite des Gehäuses G sind eine Anzeigeeinrichtung D und Bedienungsorgane in Form von drei Schaltknöpfen Sa-Sc und eines Schiebeknopfes K erkennbar. An der Vorderseite des Gehäuses ist eine Aussparung 1 angeordnet, hinter der sich ein hier im offenen Zustand dargestellter Messraum in Form einer Messnische N befindet. Die Messnische N kann, wie weiter unten noch erläutert wird, durch ein bewegliches Wandteil zum Gehäuseäusseren hin geöffnet und wieder abgeschlossen werden. Der Aussparung 1 gegenüberliegend befindet sich an der Hinterseite des Gehäuses ein hier nicht sichtbarer Schnittstellenanschluss zur Verbindung mit einem externen Gerät. Der Schnittstellenanschluss IF ist in Fig. 2 dargestellt. An der Unterseite des Gehäuses G befindet sich eine Bodenplatte B, die im Bereich der Messnische N von einem typischerweise kreisförmigen Messfenster F durchbrochen ist.

Zum Ausmessen eines Messobjekts wird das Handmessgerät bei offener Messnische so auf das Messobjekt aufgesetzt, dass sich die auszumessende Messstelle im Bereich des Messfensters F befindet. Zur Erleichterung der genauen Positionierung ist das Handmessgerät mit speziellen Visiermitteln ausgestattet, auf die weiter unten noch näher eingegangen wird.

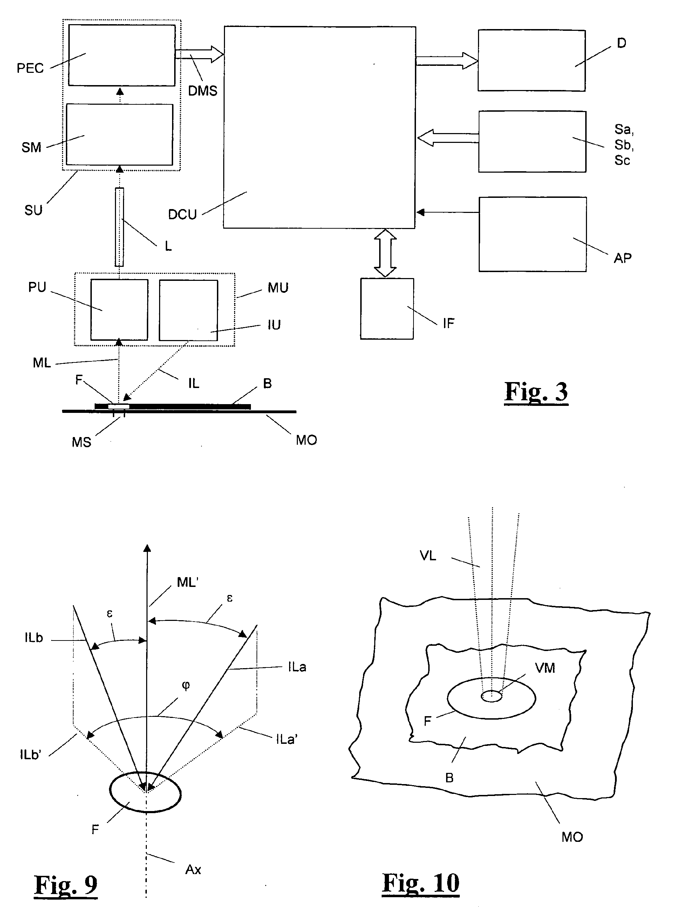

Die wichtigsten Funktionseinheiten des erfindungsgemässen fotoelektrischen Handmessgeräts sowie deren räumliche Anordnung sind aus der Fig. 2, die das Handmessgerät ohne Gehäuse zeigt, und aus der blockschematischen Darstellung der Fig. 3 ersichtlich. Man erkennt eine als Ganzes mit MU bezeichnete optische Messeinheit mit einer Beleuchtungseinrichtung IU und einer Aufpickeinrichtung PU, eine Spektrometereinheit SU mit einem Spektrometer SM und einer fotoelektrischen Wandlereinrichtung PEC, eine Leiterplatte PCB, auf der sich eine (digitale) Verarbeitungs- und Steuerelektronik DCU des Handmessgeräts befindet, eine Stromversorgung in Form eines Akkumulatorpacks AP sowie den schon genannten Schnittstellenanschluss IF, die Anzeigeeinrichtung D, die drei Schaltknöpfe Sa-Sc und den Schiebeknopf K. An der Spektrometereinheit SU ist eine weitere Leiterplatte PCB2 montiert, die die zur fotoelektrischen Wandlereinrichtung PEC zugehörige Elektronik trägt und über nicht gezeigte elektrische Leitungen mit der Leiterplatte PCB bzw. der darauf befindlichen Verarbeitungs- und Steuerelektronik DCU verbunden ist.

Die in der optischen Messeinheit MU enthaltene Beleuchtungseinrichtung IU ist zur Beaufschlagung eines Messobjekts MO durch das Messfenster F hindurch mit Beleuchtungslicht IL ausgebildet. Die ebenfalls in der optischen Messeinheit MU enthaltene Aufpickeinrichtung PU dient zum Auffangen des von der Messstelle MS des Messobjekts MO remittierten Messlichts ML durch das Messfenster F hindurch. Ein Lichtleiter L führt das aufgefangene Messlicht ML der Spektrometereinheit SU zu.

Die allgemeine Funktionsweise des Handmessgeräts ist wie folgt: Die Messeinheit MU beaufschlagt die Messstelle MS des Messobjekts MO mit Beleuchtungslicht IL, fängt das von der Messstelle MS remittierte Messlicht ML auf und leitet es über den Lichtleiter L in die Spektrometereinheit SU ein. Dort wird das Messlicht ML mittels des Spektrometers SM in seine Spektralanteile zerlegt und mittels der fotoelektrischen Wandlereinrichtung PEC in entsprechende elektrische (digitale) Messsignale DMS umgewandelt. Diese werden der Verarbeitungs- und Steuerelektronik DCU zugeführt und von dieser verarbeitet. Die Messsignale oder daraus abgeleitete Messdaten werden mittels der Anzeigeeinrichtung D angezeigt. Alternativ oder zusätzlich können die Messsignale oder daraus berechnete Messdaten an den Schnittstellenanschluss IF ausgegeben werden. Alle Mess- und Verarbeitungsvorgänge werden durch die Verarbeitungs- und Steuerelektronik DCU gesteuert, wobei der Benutzer über die Bedienungsorgane Sa-Sc Einfluss nehmen kann. Ferner ist in an sich bekannter Weise auch ein Datenaustausch oder eine externe Steuerung über den Schnittstellenanschluss IF möglich.

In dieser Allgemeinheit entspricht das erfindungsgemässe Handmessgerät bezüglich Konstruktion und Funktion dem Stand der Technik, wie er z.B. durch die eingangs erwähnten auf dem Markt befindlichen fotoelektrischen Handmessgeräte gegeben ist. Insbesondere sind die Spektrometereinheit SU mit der zugehörigen fotoelektrischen Wandlereinrichtung PEC, die Verarbeitungs- und Steuerelektronik DCU, die Anzeigeeinrichtung D (LCD-Panel) und der Schnittstellenanschluss IF gleich oder analog wie bei den bekannten Geräten dieser Art ausgebildet. Der Fachmann bedarf also insofern keiner näheren Erläuterungen. Der ausschlaggebende Unterschied der Erfindung gegenüber dem Stand der Technik besteht vor allem in der Konzeption der erfindungsgemässen optischen Messeinheit MU und der Anordnung des Messfensters F in einem auf- und abschliessbaren Messraum, worauf im folgenden noch im Detail eingegangen wird.

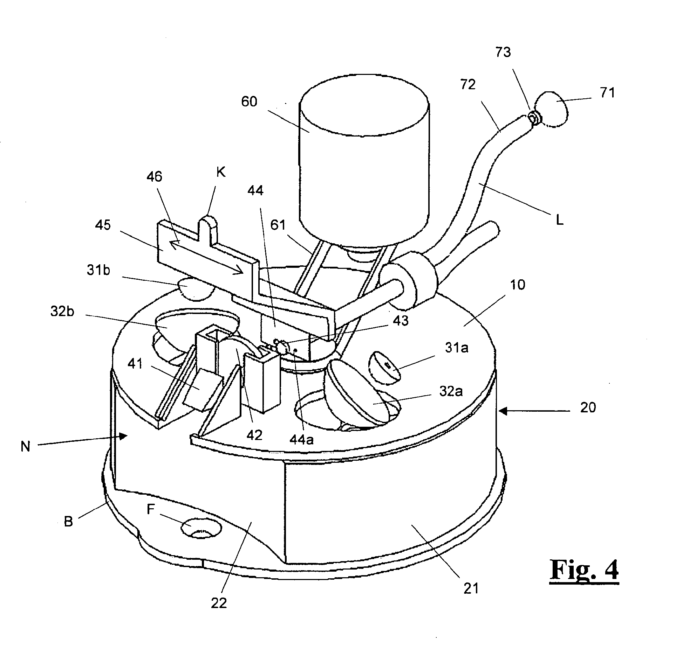

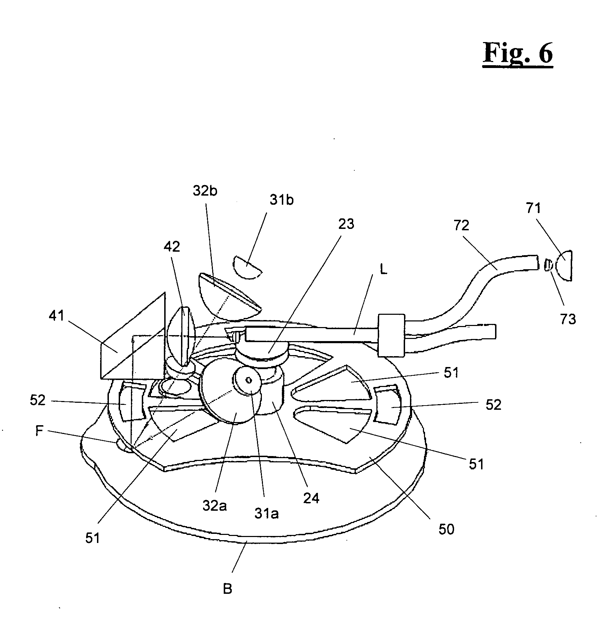

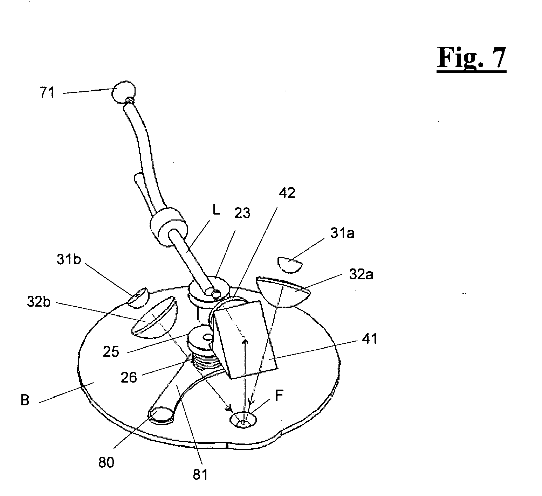

Wie die Figuren 4-8 zeigen, umfasst die erfindungsgemässe optische Messeinheit MU die schon genannte Bodenplatte B, eine parallel dazu im Abstand oberhalb angeordnete, im Gehäuse G feststehende und als Montageplatte dienende Deckelplatte 10, einen zwischen Bodenplatte B und Deckelplatte 10 drehbar angeordneten, im wesentlichen zylindrischen Mantel 20 mit einem zylindrischen Teil 21 und einer einwärts vorspringenden Einbuchtung 22 (oder einer Abflachung), ein Paar von Beleuchtungslichtquellen in Form von Leuchtdioden 31 a, 31 b, ein Paar von zugeordneten Beleuchtungsoptiken in Form von Beleuchtungslinsen 32a, 32b, ein Umlenkprisma 41, eine Aufpickoptik in Form einer Aufpicklinse 42, eine Einkoppelungslinse 43, eine mit mehreren unterschiedlich grossen Blendenöffnungen 44a versehene, verschiebbare Blende 44, eine im Inneren des Mantels 20 koaxial zu diesem angeordnete und mit diesem drehfest verbundene Fensterplatte 50, einen Antriebsmotor 60 mit zugehörigem Antriebsriemen 61 für den Mantel 20, den schon genannten, durch ein Faserbündel gebildeten Lichtleiter L, eine Visierlichtquelle in Form einer weiteren Leuchtdiode 71, einen weiteren, ebenfalls durch ein Faserbündel gebildeten Lichtleiter 72, eine Einkoppellinse 73 und eine körperliche Weissreferenz 80, die auf dem freien Ende eines Schwenkarm 81 sitzt, der mit dem Mantel 20 auf geeignete Weise begrenzt auf Drehung gekoppelt ist. Mit Ausnahme des Mantels 20 mit der darin befindlichen Fensterplatte 50 und der Weissreferenz 80 sowie der verschiebbaren Blende 44 sind alle Bauteile ortsfest an der Deckelplatte 10 oder anderen Orts im Gehäuse G angeordnet. Die Drehung des Mantels 20 mit der darin befindlichen Fensterplatte 50 wird durch die Steuer- und Verarbeitungseinrichtung DCU gesteuert.

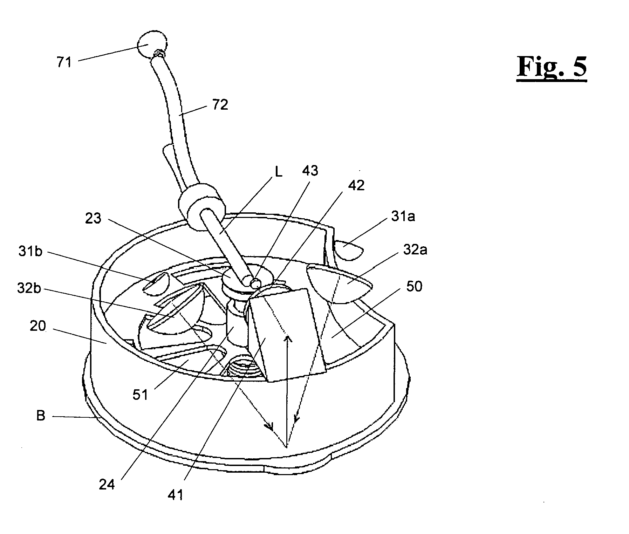

In den Fig. 5-7 sind verschiedene Teile der optischen Messeinheit MU weggelassen, um den Blick auf die dahinter bzw. darunter liegenden Teile freizugeben und die konstruktiven Details deutlicher erkennen zulassen. Aus denselben Gründen sind auch die Montageorgane für die verschiedenen Lichtquellen und Linsen nicht eingezeichnet.

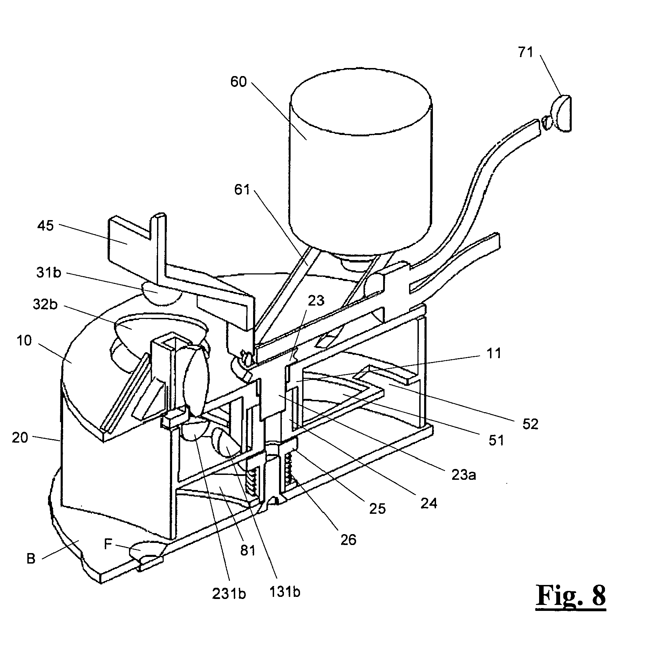

Die Drehlagerung des Mantels 20 ist aus der Schnittdarstellung der Fig. 8 erkennbar. Der Motor 60 treibt über den Riemen 61 eine Riemenscheibe 23 an, welche über eine kurze Welle 23a in einer Buchse 11 der Deckelplatte 10 drehbar gelagert ist. Auf der Welle 23a sitzt drehfest eine Nabe 24, welche die Fensterplatte 50 trägt oder Teil derselben ist. Ein Stützrohr 25 schliesslich stützt die Nabe 24 und damit die Fensterplatte 50 auf der Bodenplatte B ab.

Ein erster wesentlicher Aspekt der Erfindung besteht in der speziellen Ausbildung der Messeinheit MU so, dass die Beleuchtung des Messobjekts aus zwei zu einander senkrechten Raumrichtungen schräg aus dem Inneren des Gehäuses G heraus erfolgt. Im konkreten Ausführungsbeispiel erfolgt die Beleuchtung durch den Innenraum des Mantels 20 und dann durch das Messfenster F hindurch. Dabei müssen natürlich die für fotoelektrischen Messgeräte üblichen bzw. genormten Beleuchtungsgeometrien (Beleuchtungswinkelbereiche) eingehalten sein. Die übliche genormte Beleuchtungsgeometrie sieht einen Beleuchtungswinkelbereich ε von 45° +/- 5° vor (bezogen auf die Normale zum Messobjekt am Messort), wobei dann der Aufpickwinkelbereich α, unter welchem das vom Messobjekt remittierte Messlicht aufgefangen wird, 0° +/- 5° beträgt (ebenfalls bezogen auf die Normale zum Messobjekt am Messort). Für Spezialanwendungen werden aber oft auch andere Beleuchtungswinkelbereiche verwendet, z.B. 60° +/- 5° oder 75° +/- 5° (bezogen auf die Normale zum Messobjekt am Messort), wobei der Aufpickwinkelbereich wieder 0° +/- 5° beträgt. Ein weiterer vorteilhafter Aufpickwinkelbereich ist z.B. 8°+/-5°. Wenn dabei zusätzlich eine weitere Lichtquelle mit einem Beleuchtungswinkelbereich von 8°+/-5° vorgesehen ist, lassen sich mit einer solchen Messgeometrie auch 8°/8°-Glanzmessungen durchführen.

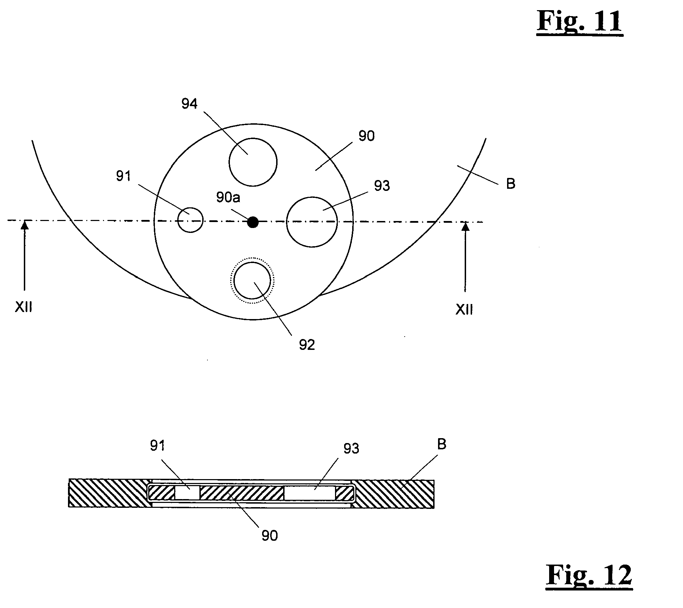

Der Kernpunkt der Beleuchtungsgeometrie der erfindungsgemässen Messeinheit MU ist darin zu sehen, dass jeweils ein Paar von Lichtquellen 31a, 31b und zugeordneten Beleuchtungslinsen 32a, 32b vorgesehen ist, die das Messobjekt je unter demselben Beleuchtungswinkelbereich ε beleuchten, aber aus zwei zueinander im wesentlichen senkrechten räumlichen Richtungen. Die Lichtquellen und Beleuchtungslinsen sind dazu so angeordnet, dass die beiden von ihnen erzeugten Beleuchtungsstrahlengänge (zumindest in der Nähe des Messfensters F, also beim Auftreffen auf das Messobjekt) bezogen auf eine zur Ebene des Messfensters F normale Achse Ax um einen Versetzungswinkel ϕ von im wesentlichen 90° gegeneinander versetzt sind. Die Fig. 9 verdeutlicht dies. Die (Hauptachsen der) beiden Beleuchtungsstrahlengänge sind darin mit ILa und ILb bezeichnet und ihre Projektionen auf die Ebene des Messfensters F mit ILa' und ILb'. Der Winkel zwischen den beiden Projektionen ergibt den Versetzungswinkel ϕ. Durch diese erfindungsgemässe räumliche Winkelversetzung ergibt sich eine weitgehende, derjenigen einer Ringbeleuchtung praktisch ebenbürtige Positionierungsunabhängigkeit des Messergebnisses. Zusätzlich zur Positionierungsunabhängigkeit werden dadurch aber auch die Voraussetzungen für die einfache konstruktive Umsetzung zahlreicher weiterer wichtiger Funktionsmerkmale des Messgeräts, speziell seiner präzisen Positionierbarkeit, geschaffen.

Die Beleuchtungslinsen 32a, 32b können auch entfallen, wenn die Lichtquellen 31a, 31b sehr nahe beim Messobjekt (Messfenster F) angeordnet sind. Die Beleuchtungsanordnung besteht dann aus den Lichtquellen (z.B. LEDs mit transparentem Gehäuse) und geeignet geformten Lichtaustrittsöffnungen (Aperturen).

Die beiden Beleuchtungsstrahlengänge verlaufen, wie schon erwähnt, durch das Innere des Mantels 20. Die Fensterplatte 50 ist dazu mit mindestens einem passend bemessenen Beleuchtungsfenster 51 versehen, durch welches das Beleuchtungslicht hindurchtreten kann. Vorzugsweise ist für jeden der beiden Beleuchtungsstrahlengänge ein eigenes (kleineres) Beleuchtungsfenster vorgesehen. Gemäss einer bevorzugten Ausführungsform sind in der Fensterplatte 50 in Umfangrichtung hintereinander zwei oder mehrere Paare von Beleuchtungsfenstern 51 vorgesehen und zumindest einige von ihnen mit Filtern zur Beeinflussung des Beleuchtungslichts ausgestattet. Solche Filter können z.B. Farb-, UV- oder Polarisationsfilter sein. Durch entsprechendes Verdrehen des Mantels 20 und damit der Fensterplatte 50 können so je nach Messsituation erforderliche Filter in die Beleuchtungsstrahlengänge eingeschwenkt werden. Die Fensterplatte 50 hat in dieser bevorzugten Ausführungsform somit die Funktion eines an sich bekannten Filterrads.

Das vom Messobjekt remittierte Messlicht ML wird von der Aufpickeinrichtung der optischen Messeinheit MU beim gezeigten Ausführungsbeispiel unter einem Aufpickwinkelbereich α von 0° +/- 5° (bezogen auf die Normale zum Messfenster F) aufgefangen. Ein vorzugsweiser alternativer Aufpickwinkelbereich ist z.B. 8°+/-5°. Die Aufpickeinrichtung besteht im wesentlichen aus dem Umlenkprisma 41, der Aufpicklinse 42, der Einkoppelungslinse 43 und der Blende 44. Das Umlenkprisma 41 befindet sich senkrecht über dem Messfenster F. In Messposition des Mantels 20 gelangt das remittierte Messlicht ML im Inneren des Mantels 20 durch ein Aufpickfenster 52 an der Peripherie der Fensterplatte 50 über das Umlenkprisma 41 zur Aufpicklinse 42 und wird mittels der Einkoppelungslinse 43 durch die Blende 44 hindurch in den Lichtleiter L eingekoppelt, welcher es dann der Spektrometereinheit SU zuführt. Vorzugsweise weist die Fensterplatte 50 längs ihres Rands zwei oder mehrere Aufpickfenster 52 auf, wobei deren Anzahl und Anordnung auf die Anzahl der Beleuchtungsfenster 51 abgestimmt ist und jeweils einem Paar von Beleuchtungsfenstern 51 ein Aufpickfenster 52 zugeordnet ist. Je nach Messposition (Drehstellung) des Mantels 20 befindet sich somit ein anderes Beleuchtungsfensterpaar und Aufpickfenster in den beiden Beleuchtungsstrahlengängen bzw. dem Aufpickstrahlengang. Im Bereich der Einbuchtung 22 des Mantels 20 weist die Fensterplatte 50 natürlich keine Fenster auf. Anstelle der Filter oder zusätzlich zu den Filtern in den Beleuchtungsfenstern 51 können auch in den Aufpickfenstern 52 Filter angeordnet sein.

Wenn die optische Messeinheit MU ohne Filter ausgestattet sein soll, kann die Fensterplatte 50 natürlich wegfallen. In diesem Falle müsste der Mantel 20 z.B. durch Speichen oder dgl. mit der Nabe 23 verbunden oder auf andere Art drehbar gelagert sein.

Die Blende 44 ist Teil eines gekröpften Schiebers 45, welcher an seinem oberen Ende den schon erwähnten, aus der Gehäuseoberseite herausragenden Schiebeknopf K trägt und im Gehäuse G in Richtung des Pfeils 46 manuell hin- und her verstellbar gelagert ist. Durch Verstellen des Schiebers 45 wird jeweils eine der unterschiedlich grossen Blendenöffnungen 44a der Blende 44 in den Aufpickstrahlengang zwischen Einkoppelungslinse 43 und Lichtleiter L eingebracht. Die Blendenöffnungen 44a begrenzen die Grösse (Durchmesser) des für die Messung berücksichtigten Messbereichs (Messflecks) auf dem Messobjekt. Auf diese Weise kann das Messgerät einfach auf unterschiedliche Messsituationen eingestellt werden.

Die beiden Beleuchtungslichtquellen 31a und 31b können (über die Verarbeitungs- und Steuerelektronik DCU) auch selektiv ein- und ausschaltbar sein. Dies erlaubt die unabhängige Messung aus zwei zueinander um 90° versetzten Raumrichtungen und dadurch die Erkennung einer eventuell vorhandenen Oberflächenstrukturierung des Messobjekts und ggf. die Einleitung entsprechender Massnahmen.

Ein weiterer wichtiger Aspekt der Erfindung besteht in dem schon genannten, zum Gehäuseäusseren hin auf- und abschliessbaren, hier im gezeigten Beispiel als Messnische N ausgebildeten Messraum und der Anordnung des Messfensters F im Bereich dieses Messraums bzw. dieser Messnische. Wie die Fig. 1 verdeutlicht, ist bei geöffneter Messnische N das Messfenster F für den Benutzer des Geräts ungehindert sichtbar, so dass das Handmessgerät einfach und sicher auf dem Messobjekt so positioniert werden kann, dass die auszumessende Messstelle des Messobjekts im Bereich des Messfensters zu liegen kommt. Während der Messung wird dann die Messnische N zwecks Vermeidung von Fremdlichteinflüssen wieder geschlossen.

Das Öffnen und Schliessen der Messnische N erfolgt durch ein bewegliches Wandteil, das gemäss einem weiteren Aspekt der Erfindung durch den zylindrischen Teil 21 des Mantels 20 der optischen Messeinheit MU gebildet wird. Je nach Drehstellung des Mantels 20 befindet sich entweder seine Einbuchtung (oder Abflachung) 22 oder der zylindrische Teil 21 des Mantels 20 vor der Aussparung 1 des Gehäuses G. Der Mantel 20 ist so im Gehäuse positioniert, dass sein zylindrischer Teil 21 die Aussparung 1 normalerweise verschliesst, wobei dann das Messfenster F innerhalb des Mantels 20 liegt. Die Messnische N befindet sich in diesem Fall innerhalb des Mantels 20 und ist nach aussen hin verschlossen. Anderseits ist die Einbuchtung (bzw. Abflachung) 22 des Mantels 20 so bemessen und geformt, dass sie bezogen auf das Gehäuse G innerhalb des Messfensters F liegt, wenn der Mantel 20 in eine Stellung gedreht ist, bei der sich die Einbuchtung im Bereich der Aussparung 1 befindet. Die Messnische N ist in diesem Fall nach aussen offen, aber gegen das Innere des Gehäuses durch die Einbuchtung 22 abgeschlossen. Dadurch wird das Eindringen von Staub etc. in das Gehäuseinnere verhindert. Die Figuren 1 und 4 zeigen den Mantel 20 in einer Drehstellung, bei der die Messnische N nach aussen geöffnet ist. Diese Drehstellung des Mantels 20 wird im folgenden als Visierposition bezeichnet. Alle anderen Drehstellungen des Mantels 20, bei denen die Messnische N nach aussen geschlossen ist, werden als Messpositionen bezeichnet. Eine dieser Drehstellungen ist in Fig. 5 dargestellt.

Beim gezeigten Ausführungsbeispiel befindet sich der Messraum vollständig innerhalb bzw. hinter der vorderen Gehäusewand. Gemäss einer Variante ist es jedoch auch möglich, dass die Messeinheit MU so im Gehäuse G angeordnet ist, dass die Bodenplatte B über die vordere Gehäusewand hinausragt, wobei der Messraum dann ganz oder teilweise ausserhalb der vorderen Gehäusewand liegt. In seinen Messpositionen schliesst der Mantel 20 den Messraum ebenfalls wieder staub- und lichtdicht ab.

Das Messfenster F dient (in Visierposition des Mantels, also bei geöffneter Messnische N) als verhältnismässig grobes Visier zur Positionierung des Messgeräts auf der gewünschten Messstelle des Messobjekts. Für eine verbesserte Positioniergenauigkeit, die insbesondere bei sehr kleinen Messstellen von Wichtigkeit ist, ist gemäss einem weiteren Aspekt der Erfindung eine zusätzliche Visierhilfe in Form einer optischen Visiereinrichtung vorgesehen, die durch das Messfenster F hindurch eine Visierlichtmarke VM (Fig. 10) auf das Messobjekt projiziert, welche die exakte Position des von der Aufpickeinrichtung erfassten Messbereichs auf dem Messobjekt optisch markiert. Die optische Visiereinrichtung kann an sich beliebig ausgebildet sein, zu ihrer Realisierung ist lediglich eine Visierlichtquelle und eine passende Projektionsanordnung erforderlich. Gemäss einer besonders vorteilhaften Ausführungsform der Erfindung wird jedoch für die Projektion der Visierlichtmarke die Aufpickeinrichtung benutzt, wobei das von der Viesierlichtquelle 71 ausgehende Visierlicht über die Einkoppelungslinse 73 und den Lichtleiter 72 in umgekehrter Richtung zum Messstrahlengang in den Lichtleiter L eingekoppelt wird und durch die Blende 44, die hier als Auskoppelungslinse wirkende Einkoppelungslinse 43, die hier als Projektionslinse wirkende Aufpicklinse 42 und das Umlenkprisma 41 innerhalb des Messfensters F auf das Messobjekt gelenkt wird und dort die Visierlichtmarke erzeugt. Die Blendenöffnungen 44a der Blende 44 begrenzen dabei die Grösse der Visierlichtmarke genau auf die Grösse des dann für die Messung berücksichtigten Messbereichs. Die Blende 44 bildet somit gemeinsame verstellbare Blendenmittel für die Aufpickeinrichtung und die optische Visiereinrichtung. Somit ist für den Benutzer insbesondere bei kleinen Farbfeldern ersichtlich, wie das Gerät positioniert werden muss, um sicher innerhalb des Messfeldes zu messen. Der Strahlengang des Visierlichts zwischen dem Umlenkprisma 41 und dem Messfenster F ist in Figur 10 dargestellt und mit VL bezeichnet.

Ein weiterer Aspekt der Erfindung betrifft die körperliche Weissreferenz (Weisskachel) 80. Diese ist, wie schon erwähnt, am freien Ende des Schwenkarms 81 angeordnet, der seinerseits direkt auf der Bodenplatte B gleitend koaxial zum Mantel 20 schwenkbar gelagert und mittels einer Feder 26 leicht gegen die Bodenplatte gedrückt ist. Durch Verdrehung des Mantels 20 in einer Richtung wird der Schwenkarm 81 nach Art eines Schleppzeigers mittels eines nicht dargestellten Mitnehmers soweit mit verschwenkt, bis die auf ihm befindliche Weissreferenz 80 genau über dem Messfenster F liegt. In dieser Position kann dann eine Weissreferenzmessung durchgeführt werden. Bei Verdrehung des Mantels in der anderen Richtung wird der Schwenkarm nicht mitgenommen, so dass das Messfenster F frei bleibt und die Ausmessung des Messobjekts erfolgen kann.

Gemäss einer bevorzugten Weiterbildung ist das erfindungsgemässe Handmessgerät als sogenanntes Gonio-Messgerät ausgebildet, das die Beleuchtung des Messobjekts unter zwei oder mehreren verschiedenen definierten Einfallswinkelbereichen erlaubt. Die optische Messeinheit MU ist dazu mit einem oder mehreren weiteren Paaren von Beleuchtungslichtquellen und ggf. zugeordneten Beleuchtungsoptiken ausgestattet, die analog dem beschriebenen Paar von Beleuchtungslichtquellen 31a, 31 bund Beleuchtungsoptiken 32a, 32b ausgebildet und angeordnet sind, aber das Messobjekt im Bereich des Messfensters F je unter einem anderen Einfallswinkelbereich mit Beleuchtungslicht beaufschlagen. Typische Einfallswinkelbereiche sind schon weiter vorne erwähnt. In der Fig. 8 sind zwei zusätzliche Beleuchtungslichtquellen 131 bund 231b eingezeichnet. Für diese zusätzlichen Beleuchtungswinkelbereiche kann alternativ auch nur je eine einzige Beleuchtungslichtquelle vorgesehen sein.

In den Figuren 11 und 12 ist eine alternative Ausgestaltung der Messeinheit MU schematisch dargestellt. Hierbei ist anstelle des Messfensters F in der Bodenplatte B ein Blendenrad 90 vorgesehen, das in seiner Ebene um seine Achse 90a drehbar gelagert ist. Das Blendenrad ragt seitlich leicht aus der Bodenplatte B heraus und weist vorzugsweise einen geriffelten Rand auf, so dass es manuell leicht gedreht werden kann. Im Blendenrad 90 sind mehrere, unterschiedlich grosse Blendenöffnungen 91-93 vorgesehen, die die Rolle des Messfensters F übernehmen und gleichzeitig den Messbereich begrenzen. Zusätzlich ist im bzw. auf dem Blendenrad 90 eine körperliche Weissreferenz 94 angeordnet. Durch Verdrehen des Blendenrads 90 können verschieden grosse Messbereiche festgelegt bzw. die Weissreferenz in den Messstrahlengang eingebracht werden.

Gemäss einer weiteren vorteilhaften Weiterbildung des erfindungsgemässen Handmessgeräts ist es anstelle des Schnittstellenanschlusses IF oder zusätzlich zu diesem noch mit einer drahtlosen Kommunikationsschnittstelle ausgestattet, die den Handhabungskomfort erhöht. Geeignete drahtlose Kommunikationschnittstellen sind allgemein bekannt und bedürfen daher keiner näheren Erläuterung.

Vorstehend wurde das erfindungsgemässe Handmessgerät am Beispiel eines Spektralfotometers erläutert. Es versteht sich jedoch, dass die Erfindung nicht auf Spektralfotometer beschränkt ist. Vielmehr kann das Handmessgerät auch auch klassisches Farb- oder Dichtemessgerät ausgebildet sein, wobei dann anstelle der Spektrometereinheit SU eine entsprechende Farbmesseinheit bzw. Dichtemesseinheit vorhanden wäre. Solche Farb- und Dichtemesseinheiten (im wesentlichen eine Kombination von Messfiltern und passenden fotoelektrischen Wandlern) sind allgemein bekannt und bedürfen daher für den Fachmann keiner näheren Erläuterung.

## Patentansprüche

1. Optische Messeinheit für ein Messgerät zur fotoelektrischen Ausmessung einer Messstelle eines Messobjekts, mit einer Beleuchtungseinrichtung (IU) zur Beaufschlagung des Messobjekts (MO) mit Beleuchtungslicht unter einem ersten definierten, relativ kleinen Einfallswinkelbereich (ε) und mit einer optischen Aufpickeinrichtung (PU) zum Auffangen des vom Messobjekt (MO) remittierten Messlichts unter einem definierten, relativ kleinen Aufpickwinkelbereich (α), **dadurch gekennzeichnet, dass** die Beleuchtungseinrichtung (IU) ein Paar von Beleuchtungslichtquellen (31a, 31b) aufweist, die das Messobjekt (MO) aus verschiedenen Raumrichtungen unter demselben ersten Einfallswinkelbereich (ε) mit Beleuchtungslicht beaufschlagen, wobei die Beleuchtungsstrahlengänge (ILa, ILb) zumindest in der Nähe des Messobjekts (MO) bezogen auf eine zur Messstelle normale Achse (Ax) um einen Versetzungswinkel (ϕ) von im wesentlichen 90° gegeneinander versetzt sind.

2. Messeinheit nach Anspruch 1, **dadurch gekennzeichnet, dass** der erste Einfallswinkelbereich (ε) im wesentlichen von 40° bis 50° reicht.

3. Messeinheit nach Anspruch 1 oder 2, **dadurch gekennzeichnet, dass** der Aufpickwinkelbereich (α) im wesentlichen ein Bereich von -5° bis +5° bis zu 5° bis 15° ist.

4. Messeinheit nach einem der vorangehenden Ansprüche, **dadurch gekennzeichnet, dass** die Beleuchtungslichtquellen (31a, 31b) selektiv ein- und ausschaltbar sind.

5. Messeinheit nach einem der vorangehenden Ansprüche, **dadurch gekennzeichnet, dass** die Beleuchtungseinrichtung (IU) dazu ausgebildet ist, das Messobjekt (MO) selektiv unter dem ersten und mindestens einem weiteren definierten Einfallswinkelbereich mit Beleuchtungslicht zu beaufschlagen.

6. Messeinheit nach Anspruch 5, **dadurch gekennzeichnet, dass** die Beleuchtungseinrichtung (IU) für jeden weiteren Einfallswinkelbereich mindestens eine Beleuchtungslichtquelle (131b, 231b) aufweist, die über je eine zugeordnete Beleuchtungsoptik das Messobjekt (MO) mit Beleuchtungslicht beaufschlagt.

7. Messeinheit nach Anspruch 5, **dadurch gekennzeichnet, dass** die Beleuchtungseinrichtung (IU) für jeden weiteren Einfallswinkelbereich ein Paar von Beleuchtungslichtquellen (131b, 231b) aufweist, die über je eine zugeordnete Beleuchtungsoptik das Messobjekt (MO) mit Beleuchtungslicht beaufschlagen, wobei die Beleuchtungslichtquellen (131b, 231b) jedes Paars so angeordnet und die zugeordneten Beleuchtungsoptiken so ausgebildet sind, dass die Beleuchtungsstrahlengänge (ILa, ILb) zumindest in der Nähe des Messobjekts (MO) bezogen auf eine zur Messstelle normale Achse (Ax) um einen Versetzungswinkel (ϕ) von im wesentlichen 90° gegeneinander versetzt sind.

8. Messeinheit nach einem der vorangehenden Ansprüche, **dadurch gekennzeichnet, dass** sie in die Strahlengänge des Beleuchtungslichts und/oder des Messlichts einbringbare Filter aufweist.

9. Messeinheit nach Anspruch 8, **dadurch gekennzeichnet, dass** die Filter Farb-, Dichte-, UV- oder Polarisationsfilter sind.

10. Messeinheit nach einem der vorangehenden Ansprüche, **dadurch gekennzeichnet, dass** sie eine in die Beleuchtungs- und Messlichtstrahlengänge einbringbare körperliche Weissreferenz (80) aufweist.

11. Messeinheit nach einem der vorangehenden Ansprüche, **dadurch gekennzeichnet, dass** die Aufpickeinrichtung (PU) Mittel (41) zur Umlenkung des aufgepickten Messlichts um im wesentlichen 90° aufweist.

12. Messeinheit nach einem der vorangehenden Ansprüche, **dadurch gekennzeichnet, dass** die Aufpickeinrichtung (PU) verstellbare Blendenmittel (44) zur Begrenzung des erfassten Messbereichs (MS) auf dem Messobjekt aufweist.

13. Messeinheit nach einem der vorangehenden Ansprüche, **dadurch gekennzeichnet, dass** die Aufpickeinrichtung (PU) ein Umlenkprisma (41), eine Aufpicklinse (42), eine Einkoppelungslinse (43) und verstellbare Blendenmittel (44) aufweist, wobei die Einkoppelungslinse (43) das ihr über das Umlenkprisma (41) und die Aufpicklinse (42) zugeführte Messlicht durch die Blendenmittel (44) in einen Lichtleiter (L) einspeist und die verstellbaren Blendenmittel (44) den erfassten Messbereich (MS) auf dem Messobjekt begrenzen.

14. Messeinheit nach einem der vorangehenden Ansprüche, **dadurch gekennzeichnet, dass** sie eine optische Visiereinrichtung (71, 72,73, 41, 42, 43, 44, L) aufweist, welche eine Visierlichtmarke (VM) auf das Messobjekt (MO) projiziert, die die Position des von der Aufpickeinrichtung (PU) erfassten Messbereichs auf dem Messobjekt optisch markiert.

15. Messeinheit nach einem der vorangehenden Ansprüche, **dadurch gekennzeichnet, dass** sie eine optische Visiereinrichtung (71, 72,73, 41, 42, 43, 44, L) aufweist, welche eine Visierlichtmarke (VM) auf das Messobjekt (MO) projiziert, die die Grösse des von der Aufpickeinrichtung (PU) erfassten Messbereichs auf dem Messobjekt optisch markiert.

16. Messeinheit nach Anspruch 14 oder 15, **dadurch gekennzeichnet, dass** die Visiereinrichtung (71, 72,73, 41, 42, 43, 44, L) eine optisch in die Aufpickeinrichtung (PU) eingekoppelte Visierlichtquelle (71) aufweist, und dass die Projektion der Visierlichtmarke (VM) auf das Messobjekt (MO) über die Aufpickeinrichtung (PU) erfolgt.

17. Messeinheit nach einem der Ansprüche 14-16, **dadurch gekennzeichnet, dass** die Visiereinrichtung (71, 72,73, 41, 42, 43, 44, L) verstellbare Blendenmittel (44) zur Festlegung unterschiedlicher Grössen der Visierlichtmarke (VM) aufweist.

18. Messeinheit nach den Ansprüchen 12 und 17, **dadurch gekennzeichnet, dass** die verstellbaren Blendenmittel (44) der Aufpickeinrichtung (PU) gleichzeitig die verstellbaren Blendenmittel (44) der Visiereinrichtung (71, 72,73, 41, 42, 43, 44, L) bilden.

19. Fotoelektrisches Handmessgerät mit einem Gehäuse (G), das an seiner Unterseite mit einem Messfenster (F) versehen ist, durch welches hindurch die fotoelektrische Ausmessung der Oberfläche eines Messobjekts (MO) erfolgt, mit einer im Gehäuse untergebrachten optischen Messeinheit (MU), welche eine Beleuchtungseinrichtung (IU) zur Beaufschlagung des Messobjekts (MO) durch das Messfenster hindurch mit Beleuchtungslicht unter einem ersten definierten, relativ kleinen Einfallswinkelbereich (ε) und eine optische Aufpickeinrichtung (PU) zum Auffangen des vom Messobjekt (MO) remittierten Messlichts durch das Messfenster hindurch unter einem definierten, relativ kleinen Aufpickwinkelbereich (α) umfasst, mit einer von der Aufpickeinrichtung mit dem aufgefangenen Messlicht beaufschlagbaren fotoelektrischen Wandlereinrichtung (PEC) zur Umwandlung des Messlichts in entsprechende elektrische Messsignale (DMS) und mit einer elektronischen Verarbeitungseinrichtung (DCU) für die elektrischen Messsignale, **dadurch gekennzeichnet, dass** die Beleuchtungseinrichtung (IU) ein Paar von Beleuchtungslichtquellen (31a, 31b) aufweist, die das Messobjekt (MO) aus verschiedenen Raumrichtungen unter demselben ersten Einfallswinkelbereich (ε) mit Beleuchtungslicht beaufschlagen, wobei die Beleuchtungsstrahlengänge (ILa, ILb) zumindest in der Nähe des Messobjekts (MO) bezogen auf eine zur Messstelle normale Achse (Ax) um einen Versetzungswinkel (ϕ) von im wesentlichen 90° gegeneinander versetzt sind.

20. Handmessgerät nach Anspruch 19, **dadurch gekennzeichnet, dass** die optische Messeinheit (MU) gemäss einem der Ansprüche 2-18 ausgebildet ist.

21. Handmessgerät nach Anspruch 20, **dadurch gekennzeichnet, dass** das Gehäuse (G) mit einem seitlichen Messraum (N) versehen ist, welcher durch ein bewegliches Wandteil (21) nach aussen hin geöffnet und geschlossen werden kann, dass das Messfenster (F) im Bereich des Messraums (N) so angeordnet ist, dass das Messfenster bei geöffnetem Messraum frei sichtbar ist, und dass Bewegungsmittel (60) vorgesehen sind, um das Wandteil (21) zu bewegen und **dadurch** den Messraum (N) zu öffnen bzw. zu schliessen.

22. Handmessgerät nach Anspruch 21, **dadurch gekennzeichnet, dass** der Messraum (N) in geöffnetem Zustand gegenüber dem übrigen Innenraum des Gehäuses (G) im wesentlichen verschmutzungs- und lichtdicht abgeschlossen ist.

23. Handmessgerät nach einem der Ansprüche 21-22, **dadurch gekennzeichnet, dass** im Gehäuse (G) ein rohrförmiger, aus einem im wesentlichen zylindrischen Teil (21) und einer einwärts vorspringenden Einbuchtung oder Abflachung (22) bestehender Mantel (20) vorgesehen und motorisch drehbar angetrieben ist, welcher zylindrische Teil (21) das bewegliche Wandteil des Gehäuses (G) bildet und je nach Drehstellung des Mantels (20) den Messraum (N) nach aussen schliesst bzw. öffnet.

24. Handmessgerät nach Anspruch 23, **dadurch gekennzeichnet, dass** die Beaufschlagung des Messobjekts (MO) mit Beleuchtungslicht und die Erfassung des vom Messobjekt remittierten Messlichts durch das Innere des Mantels (20) hindurch erfolgt.

25. Handmessgerät nach Anspruch 24, **dadurch gekennzeichnet, dass** im Inneren des Mantels (20) mindestens eine zur Rotationsachse des Mantels senkrechte und mit dem Mantel (20) drehfest verbundene Fensterplatte (50) angeordnet ist, welche wenigstens ein Beleuchtungsfenster (51) und wenigstens ein Aufpickfenster (52) aufweist, welche Fenster so angeordnet sind, dass sie in einer definierten Drehstellung des Mantels (20) im Beleuchtungsstrahlengang bzw. im Aufpickstrahlengang der Beleuchtungseinrichtung (IU) liegen.

26. Handmessgerät nach Anspruch 25, **dadurch gekennzeichnet, dass** im Beleuchtungsfenster (51) und/oder im Aufpickfenster (52) ein Farb-, Dichte-, UV- oder Polarisationsfilter angeordnet ist.

27. Handmessgerät nach einem der Ansprüche 23-26, **dadurch gekennzeichnet, dass** eine körperliche Weissreferenz (80) vorgesehen ist, die mit dem Mantel (20) mechanisch gekoppelt und durch Drehung des Mantels (20) im Bereich des Messfensters (F) positionierbar bzw. wieder aus dem Bereich des Messfensters entfernbar ist.

28. Handmessgerät nach einem der Ansprüche 19-27, **dadurch gekennzeichnet, dass** es ein drehbares Blendenrad (90) mit einer Anzahl von unterschiedlich grossen Blendenöffnungen (91-93) zur Begrenzung des erfassten Messbereichs auf dem Messobjekt aufweist.

29. Handmessgerät nach Anspruch 28, **dadurch gekennzeichnet, dass** das Blendenrad (90) eine Weissreferenz (94) aufweist.

## Geänderte Patentansprüche

### Geänderte Patentansprüche gemäss Regel 86(2) EPÜ.

**1.** Fotoelektrisches Handmessgerät mit einem Gehäuse (G), das an seiner Unterseite mit einem Messfenster (F) versehen ist, durch welches hindurch die fotoelektrische Ausmessung der Oberfläche eines Messobjekts (MO) erfolgt, mit einer im Gehäuse untergebrachten optischen Messeinheit (MU), welche eine Beleuchtungseinrichtung (IU) zur Beaufschlagung des Messobjekts (MO) durch das Messfenster hindurch mit Beleuchtungslicht unter einem ersten definierten, relativ kleinen Einfallswinkelbereich (ε) und eine optische Aufpickeinrichtung (PU) zum Auffangen des vom Messobjekt (MO) remittierten Messlichts durch das Messfenster hindurch unter einem definierten, relativ kleinen Aufpickwinkelbereich (α) umfasst, mit einer von der Aufpickeinrichtung mit dem aufgefangenen Messlicht beaufschlagbaren fotoelektrischen Wandlereinrichtung (PEC) zur Umwandlung des Messlichts in entsprechende elektrische Messsignale (DMS) und mit einer elektronischen Verarbeitungseinrichtung (DCU) für die elektrischen Messsignale, **dadurch gekennzeichnet, dass** die Beleuchtungseinrichtung (IU) ein Paar von Beleuchtungslichtquellen (31a, 31b) aufweist, die das Messobjekt (MO) aus verschiedenen Raumrichtungen unter demselben ersten Einfallswinkelbereich (ε) mit Beleuchtungslicht beaufschlagen, wobei die Beleuchtungsstrahlengänge (ILa, ILb) zumindest in der Nähe des Messobjekts (MO) bezogen auf eine zur Messstelle normale Achse (Ax) um einen Versetzungswinkel (ϕ) von im wesentlichen 90° gegeneinander versetzt sind;
**dadurch gekennzeichnet, dass** das Gehäuse (G) mit einem seitlichen Messraum (N) versehen ist, welcher durch ein bewegliches Wandteil (21) nach aussen hin geöffnet und geschlossen werden kann, dass das Messfenster (F) im Bereich des Messraums (N) so angeordnet ist, dass das Messfenster bei geöffnetem Messraum frei sichtbar ist, und dass Bewegungsmittel (60) vorgesehen sind, um das Wandteil (21) zu bewegen und dadurch den Messraum (N) zu öffnen bzw. zu schliessen.

**2.** Fotoelektrisches Handmessgerät nach Anspruch 1, **dadurch gekennzeichnet, dass** der erste Einfallswinkelbereich (ε) im wesentlichen 45°+/-5° beträgt.

**3.** Fotoelektrisches Handmessgerät nach Anspruch 1 oder 2, **dadurch gekennzeichnet, dass** der Aufpickwinkelbereich (α) im wesentlichen 0°+/-5° oder 8°+/-5° beträgt.

**4.** Fotoelektrisches Handmessgerät nach einem der vorangehenden Ansprüche, **dadurch gekennzeichnet, dass** die Beleuchtungslichtquellen (31a, 31b) selektiv ein- und ausschaltbar sind.

**5.** Fotoelektrisches Handmessgerät nach einem der vorangehenden Ansprüche, **dadurch gekennzeichnet, dass** die Beleuchtungseinrichtung (IU) dazu ausgebildet ist, das Messobjekt (MO) selektiv unter dem ersten und mindestens einem weiteren definierten Einfallswinkelbereich mit Beleuchtungslicht zu beaufschlagen.

**6.** Fotoelektrisches Handmessgerät nach Anspruch 5, **dadurch gekennzeichnet, dass** die Beleuchtungseinrichtung (IU) für jeden weiteren Einfallswinkelbereich mindestens eine Beleuchtungslichtquelle (131b, 231b) aufweist, die über je eine zugeordnete Beleuchtungsoptik das Messobjekt (MO) mit Beleuchtungslicht beaufschlagt.

**7.** Fotoelektrisches Handmessgerät nach Anspruch 5, **dadurch gekennzeichnet, dass** die Beleuchtungseinrichtung (IU) für jeden weiteren Einfallswinkelbereich ein Paar von Beleuchtungslichtquellen (131b, 231b) aufweist, die über je eine zugeordnete Beleuchtungsoptik das Messobjekt (MO) mit Beleuchtungslicht beaufschlagen, wobei die Beleuchtungslichtquellen (131b, 231b) jedes Paars so angeordnet und die zugeordneten Beleuchtungsoptiken so ausgebildet sind, dass die Beleuchtungsstrahlengänge (ILa, ILb) zumindest in der Nähe des Messobjekts (MO) bezogen auf eine zur Messstelle normale Achse (Ax) um einen Versetzungswinkel (ϕ) von im wesentlichen 90° gegeneinander versetzt sind.

**8.** Fotoelektrisches Handmessgerät nach einem der vorangehenden Ansprüche, **dadurch gekennzeichnet, dass** sie in die Strahlengänge des Beleuchtungslichts und/oder des Messlichts einbringbare Filter aufweist.

**9.** Fotoelektrisches Handmessgerät nach Anspruch 8, **dadurch gekennzeichnet, dass** die Filter Farb-, Dichte-, UV- oder Polarisationsfilter sind.

**10.** Fotoelektrisches Handmessgerät nach einem der vorangehenden Ansprüche, **dadurch gekennzeichnet, dass** sie eine in die Beleuchtungs- und Messlichtstrahlengänge einbringbare körperliche Weissreferenz (80) aufweist.

**11.** Fotoelektrisches Handmessgerät nach einem der vorangehenden Ansprüche, **dadurch gekennzeichnet, dass** die Aufpickeinrichtung (PU) Mittel (41) zur Umlenkung des aufgepickten Messlichts um im wesentlichen 90° aufweist.

**12.** Fotoelektrisches Handmessgerät nach einem der vorangehenden Ansprüche, **dadurch gekennzeichnet, dass** die Aufpickeinrichtung (PU) verstellbare Blendenmittel (44) zur Begrenzung des erfassten Messbereichs (MS) auf dem Messobjekt aufweist.

**13.** Fotoelektrisches Handmessgerät nach einem der vorangehenden Ansprüche, **dadurch gekennzeichnet, dass** die Aufpickeinrichtung (PU) ein Umlenkprisma (41), eine Aufpicklinse (42), eine Einkoppelungslinse (43) und verstellbare Blendenmittel (44) aufweist, wobei die Einkoppelungslinse (43) das ihr über das Umlenkprisma (41) und die Aufpicklinse (42) zugeführte Messlicht durch die Blendenmittel (44) in einen Lichtleiter (L) einspeist und die verstellbaren Blendenmittel (44) den erfassten Messbereich (MS) auf dem Messobjekt begrenzen.

**14.** Fotoelektrisches Handmessgerät nach einem der vorangehenden Ansprüche, **dadurch gekennzeichnet, dass** sie eine optische Visiereinrichtung (71, 72,73, 41, 42, 43, 44, L) aufweist, welche eine Visierlichtmarke (VM) auf das Messobjekt (MO) projiziert, die die Position des von der Aufpickeinrichtung (PU) erfassten Messbereichs auf dem Messobjekt optisch markiert.

**15.** Fotoelektrisches Handmessgerät nach einem der vorangehenden Ansprüche, **dadurch gekennzeichnet, dass** sie eine optische Visiereinrichtung (71, 72,73, 41, 42, 43, 44, L) aufweist, welche eine Visierlichtmarke (VM) auf das Messobjekt (MO) projiziert, die die Grösse des von der Aufpickeinrichtung (PU) erfassten Messbereichs auf dem Messobjekt optisch markiert.

**16.** Fotoelektrisches Handmessgerät nach Anspruch 14 oder 15, **dadurch gekennzeichnet, dass** die Visiereinrichtung (71, 72,73, 41, 42, 43, 44, L) eine optisch in die Aufpickeinrichtung (PU) eingekoppelte Visierlichtquelle (71) aufweist, und dass die Projektion der Visierlichtmarke (VM) auf das Messobjekt (MO) über die Aufpickeinrichtung (PU) erfolgt.

**17.** Fotoelektrisches Handmessgerät nach einem der Ansprüche 14-16, **dadurch gekennzeichnet, dass** die Visiereinrichtung (71, 72,73, 41, 42, 43, 44, L) verstellbare Blendenmittel (44) zur Festlegung unterschiedlicher Grössen der Visierlichtmarke (VM) aufweist.

**18.** Fotoelektrisches Handmessgerät nach den Ansprüchen 12 und 17, **dadurch gekennzeichnet, dass** die verstellbaren Blendenmittel (44) der Aufpickeinrichtung (PU) gleichzeitig die verstellbaren Blendenmittel (44) der Visiereinrichtung (71, 72,73, 41, 42, 43, 44, L) bilden.

**19.** Handmessgerät nach einem der Ansprüche 1 bis 18, **dadurch gekennzeichnet, dass** der Messraum (N) in geöffnetem Zustand gegenüber dem übrigen Innenraum des Gehäuses (G) im wesentlichen verschmutzungs- und lichtdicht abgeschlossen ist.

**20.** Handmessgerät nach einem der Ansprüche 1 bis 19, **dadurch gekennzeichnet, dass** im Gehäuse (G) ein rohrförmiger, aus einem im wesentlichen zylindrischen Teil (21) und einer einwärts vorspringenden Einbuchtung oder Abflachung (22) bestehender Mantel (20) vorgesehen und motorisch drehbar angetrieben ist, welcher zylindrische Teil (21) das bewegliche Wandteil des Gehäuses (G) bildet und je nach Drehstellung des Mantels (20) den Messraum (N) nach aussen schliesst bzw. öffnet.

**21.** Handmessgerät nach Anspruch 20, **dadurch gekennzeichnet, dass** die Beaufschlagung des Messobjekts (MO) mit Beleuchtungslicht und die Erfassung des vom Messobjekt remittierten Messlichts durch das Innere des Mantels (20) hindurch erfolgt.

**22.** Handmessgerät nach Anspruch 21, **dadurch gekennzeichnet, dass** im Inneren des Mantels (20) mindestens eine zur Rotationsachse des Mantels senkrechte und mit dem Mantel (20) drehfest verbundene Fensterplatte (50) angeordnet ist, welche wenigstens ein Beleuchtungsfenster (51) und wenigstens ein Aufpickfenster (52) aufweist, welche Fenster so angeordnet sind, dass sie in einer definierten Drehstellung des Mantels (20) im Beleuchtungsstrahlengang bzw. im Aufpickstrahlengang der Beleuchtungseinrichtung (IU) liegen.

**23.** Handmessgerät nach Anspruch 22, **dadurch gekennzeichnet, dass** im Beleuchtungsfenster (51) und/oder im Aufpickfenster (52) ein Farb-, Dichte-, UV- oder Polarisationsfilter angeordnet ist.

**24.** Handmessgerät nach einem der Ansprüche 20 to 23, **dadurch gekennzeichnet, dass** eine körperliche Weissreferenz (80) vorgesehen ist, die mit dem Mantel (20) mechanisch gekoppelt und durch Drehung des Mantels (20) im Bereich des Messfensters (F) positionierbar bzw. wieder aus dem Bereich des Messfensters entfembar ist.

**25.** Handmessgerät nach einem der Ansprüche 1 bis 24, **dadurch gekennzeichnet, dass** es ein drehbares Blendenrad (90) mit einer Anzahl von unterschiedlich grossen Blendenöffnungen (91-93) zur Begrenzung des erfassten Messbereichs auf dem Messobjekt aufweist.

**26.** Handmessgerät nach Anspruch 25, **dadurch gekennzeichnet, dass** das Blendenrad (90) eine Weissreferenz (94) aufweist.
